# EUROPEAN PATENT SPECIFICATION

(11) **EP 3 555 162 B1**
(45) Date of publication and mention of the grant of the patent: **19.05.2021**
(21) Application number: 17822929.0
(22) Date of filing: 12.12.2017
(51) Int. Cl.: C08G 18/50, C08G 18/76, C08G 65/34, C08G 18/48

(54) **POLYURETHANE PRODUCT WITH SULFUR-CONTAINING POLYOL**
POLYURETHANPRODUKT MIT SCHWEFELHALTIGEM POLYOL
PRODUIT DE POLYURÉTHANE POSSÉDANT UN POLYOL CONTENANT DU SOUFRE

(30) Priority: 15.12.2016 US 201662434480 P
(43) Date of publication of application: 23.10.2019
(73) Proprietor: Dow Global Technologies LLC, Midland, MI 48674 (US)
(72) Inventor: AHMADLOO, Hamideh, CH-8810 Horgen (CH); CASATI, Francois M., CH-8810 Horgen (CH); GREAVES, Martin R., CH-8810 Horgen (CH); AMICI-KROUTILOVA, Irena, 8810 Horgen (CH); COOKSON, Paul, 8810 Horgen (CH)
(74) Representative: Beck Greener LLP
(86) International application number: PCT/US2017/065706
(87) International publication number: WO 2018/111806

(56) References cited:
- DE-A1- 4 419 583
- GB-A- 1 049 287
- GB-A- 1 533 066
- GB-A- 1 587 046
- US-A- 2 843 568
- US-A- 3 257 339

## Description

### Field

Embodiments relate to polyurethane based products prepared using a sulfur-containing polyol and method of manufacturing such polyurethane based products.

### Introduction

Polyurethane based products that have fire resistant properties are desirable for the industrial, comfort, clothing, and energy efficiency applications. It is also may be desirable to have ultra violet light stability. It is a continuous desire and challenge to improve the fire resistance properties and/or ultra violet light stability of such polyurethane based products, e.g., in instances where the polyurethane product is prepared using aromatic isocyanates.

The polyurethane based product may be a coating, adhesive, sealant, or elastomer. The polyurethane based product may be a foam, e.g., a rigid foam or a flexible foam, usable in industrial, comfort, and energy efficiency applications. Exemplary rigid foams may be used in construction, such as insulation. Exemplary flexible foams include high resiliency and viscoelastic foams. For example, viscoelastic foam, also known as slow-recovery foam, memory foam, and high-damping foam, is characterized by relatively slow, gradual recovery from compression and the viscoelastic foam may have a relatively lower resiliency. Exemplary applications for viscoelastic foam may utilize the foam's characteristics such as shape conforming, energy attenuating, and/or sound damping. For example, the viscoelastic polyurethane foam may be used in comfort applications (such as bedding and pillows), shock absorbing applications (such as in athletic padding and helmets), in soundproof applications (such as automotive interiors), noise and/or vibration dampening applications (such as earplugs, automobile panels), interliner applications (such as for fabric used in apparel), and filtration applications (such as vacuum air filters, gutter guards for protecting rain gutter/rain catcher against debris such as plant leaves and melting snow).

### Summary

Embodiments may be realized by providing a reaction system for forming a polyurethane product, the system comprising an isocyanate component and an isocyanate-reactive component including a sulfur-containing polyether polyol that is an alkoxylated sulfur-containing initiator, having a Structure (I)

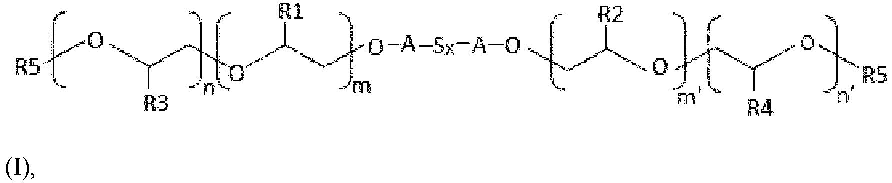

whereas R1, R2, R3 and R4 are independently selected from a group consisting of methyl (-CH₃) and ethyl (-CH₂CH₃) groups; R5 is hydrogen; x is a number selected from a group consisting of 1 and 2; m, m', n, and n' are independently selected from a number in a range of zero to twenty such that the sum of m, m', n and n' is at least six and A is selected from a group consisting of -C₂H₄- and C₆H₄ groups. The sulfur-containing polyether polyol has a number average molecular weight from 400 g/mol to 10,000 g/mol and the sulfur-containing initiator having another number average molecular weight that is less than the number average molecular weight of the sulfur-containing polyether polyol. The composition has a sulfur content from 0.1 wt% to 3.0 wt%, based on a total weight of the composition.

### Brief Description of the Drawings

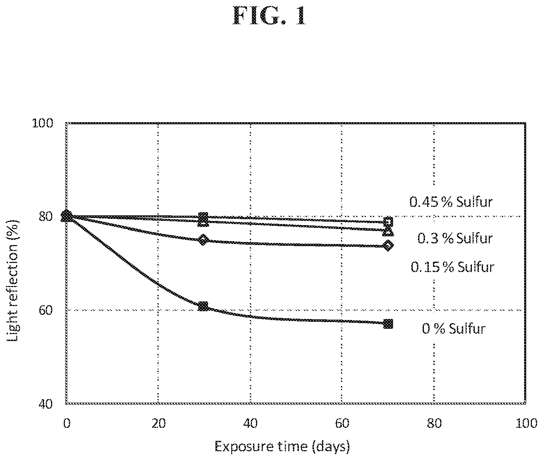

FIG. 1 illustrates a graphic representation of light reflection percentage over a period of time, for Working Examples 1 to 3 and Comparative Example A.

### Detailed Description

Polyurethane products may be prepared using a reaction system that includes an isocyanate component and an isocyanate-reactive component. In particular, the polyurethane product is formed as the reaction product of the isocyanate component and the isocyanate-reactive component. The isocyanate component includes at least one isocyanate such as an isocyanate-terminated prepolymer and/or a polyisocyanate (e.g., an aromatic polyisocyanate). The isocyanate-reactive component includes at least one compound having an isocyanate reactive hydrogen atom group, such as a hydroxyl group and/or an amine group. The isocyanate component and/or the isocyanate-reactive component may include an additive such a catalyst, a curing agent, a surfactant, a blowing agent, a polyamine, and/or a filler. Exemplary embodiments relate to a polyurethane foam product, such as a viscoelastic polyurethane foam that may be characterized as having a resiliency that is less than or equal to 20 % as measured according to ASTM D 3574 (may also be referred to as a Ball Rebound Test). For example, the resiliency may be less than 15%, less than 10%, less than 8%, less than 7%, less than 4%, and/or less than 3%. The resiliency may be greater than 1%.

According to embodiments, the isocyanate-reactive component includes at least two components. In particular, the isocyanate-reactive component includes a polyol component and an additive component. Accordingly to exemplary embodiments, the polyol component include one or more sulfur-containing polyols, and may optionally include one or more other polyols such as one or more polyether polyols and/or one or more polyester polyols. In exemplary embodiments, the isocyanate-reactive component may optionally include a sulfur containing monomer, and the sulfur containing monomer may replace at least part of the sulfur containing polyol. A level of sulfur in the polyurethane product prepared using the sulfur-containing polyols and/or sulfur-containing monomers may be at least 0.1 wt%, based on a total weight of the polyurethane product. For example, the level of sulfur may be up to 3.0 wt%, based on a total weight of the polyurethane product. For example, the amount of sulfur in a composition for forming the polyurethane product may be from 0.1 wt% to 3.0 wt% (e.g., from 0.1 wt% to 2.0 wt%, from 0.1 wt% to 1.5 wt%, from 0.1 wt% to 1.0 wt%, from 0.1 wt% to 0.7 wt%, from 0.1 wt% to 0.6 wt%, from 0.1 wt% to 0.5 wt%), based on a total weight of the composition.

It is desirable to identify sulfur containing polyols, which are usable as a component of the isocyanate-reactive component, that offer fire resistant properties and/or ultra-violet (UV) light stability, and optionally further provide oxidative stability of the polyurethane product so as to have decreased and/or minimized dependence on the amount of antioxidant added to a formulation and/or increased NOx yellow resistance. In this regard, conventional polyalkylene polyols that may be prepared using an initiator that is a non-sulfur based monol, diol, or triol and reacting the initiator with ethylene oxide and/or propylene oxide to form polyols. Yet, the conventional polyalkylene polyols may tend to suffer from oxidative instability unless an antioxidant is present. Therefore, as antioxidants deplete over time from the polyurethane based product prepared using the conventional polyalkylene polyols, the oxidative stability of the product may undesirably suffer.

Without intending to be bound by this theory, it addition to providing fire resistance properties, it is believed that the sulfur may act as a UV absorber incorporated into the polymer structure of for polyurethane product. This approach is in contrast to additives, such as antioxidants, optical brighteners and/or UV stabilizers, which may be consumed over time and may not provide long term UV protection to the polyurethane product, e.g., this is especially a consideration when aromatic isocyanates are used to form the polyurethane product. For example, the additives may merely be fillers surrounded by the polyurethane polymer matrix, as opposed to incorporated into the polymer structure. This approach is in contrast to adding a UV protective coating to the polyurethane product, which may be cost prohibitive.

In exemplary embodiments, the one or more sulfur-containing polyols may be present in an amount from 1 wt% to 99 wt% (e.g., 1 wt% to 50 wt%, 3 wt% to 45 wt%, 3 wt% to 40 wt%, 3 wt% to 35 wt%, 3 wt% to 30 wt%, 3 wt% to 27 wt%, 3 wt% to 25 wt%, 3 wt% to 20 wt%, 4 wt% to 16 wt%) based on the total weight of the isocyanate-reactive component. The other polyols, other than one or more sulfur-containing polyols, may account for 50 wt% to 99 wt% (e.g., 60 wt% to 97 wt%, 70 wt% to 97 wt%, 73 wt% to 97 wt%, so as to be the majority component in the reaction system for forming the polyurethane based product. The additive component may include additives known in the art for use in preparing polyurethane based products. Exemplary additives include a catalyst, a curing agent, a surfactant, a blowing agent, a polyamine, water, a preformed aqueous polymer dispersion, a preformed aqueous polymer dispersant, and/or a filler. The additive component accounts for 0.1 wt% to 50.0 wt% (e.g., 0.1 wt% to 40.0 wt%, 0.1 wt% to 30.0 wt%, 0.1 wt% to 20.0 wt%, 0.1 wt% to 15.0 wt%, 0.1 wt% to 10.0 wt%, 0.1 wt% to 5.0 wt%), based on the total weight of the isocyanate-reactive component. In exemplary embodiments, the additive component may minimize and/or exclude use of additionally added antioxidants, such as free radical scavengers and/or peroxide decomposers.

### Sulfur-Containing Polyol

The one or more sulfur-containing polyols may each have a nominal hydroxyl number from 2 to 8. The sulfur-containing polyol may be a polyether polyol. The sulfur-containing polyol may be a liquid at room temperature and/or may be incorporated into a carrier polyol. The sulfur-containing polyols may be in liquid form when introduced into the reaction system for forming the polyurethane product. The sulfur-containing polyol has a number average molecular weight from 400 g/mol to 10,000 g/mol (e.g., 500 g/mol to 6,000 g/mol, 500 g/mol to 5,000 g/mol, 750 g/mol to 4,500 g/mol, 850 g/mol to 4,000 g/mol, 950 g/mol to 3,500 g/mol)

The sulfur-containing polyol may be formed by an alkoxylation process that utilizes a sulfur-containing initiator (e.g., may be an alkoxylated sulfur-containing initiator). The sulfur-containing polyol may be differentiated from polyethers prepared by an etherification process, e.g., by the dehydration of a polyhydric alcohol with the sulfur-containing initiator, to form polyethers and water as a by-product. The alkoxylated sulfur-containing polyol may be prepared at temperatures from 100 °C to 160 °C, e.g., using an alkoxylation catalyst.

The sulfur-containing initiator has a number average molecular weight that is less than the number average molecular weight of the sulfur-containing polyol. The sulfur-containing initiator may include, e.g., may only include so as to consistent essentially of, sulfur, carbon, oxygen, and hydrogen atoms. Optionally, the sulfur-containing initiator may further include nitrogen. The sulfur-containing initiator may be include one or more multi-functional initiators, e.g., such that each has a nominal hydroxyl number from 2 to 8. The sulfur-containing initiator may be a liquid at room temperature and/or may be incorporated into a carrier polyol. The sulfur-containing initiator may be devoid of an oxygen atom bound directly to a sulfur atom. The sulfur-containing initiator may be devoid of a carboxyl group. The sulfur-containing initiator may be a linear (i.e., non-branched) molecular. The sulfur-containing initiator may be a polyol having a nominal hydroxyl functionality from 2 to 6 (e.g., by be a diol or triol). The sulfur-containing initiator may be a monomer or may be a previously formed relatively low molecular weight alkoxylated polyol prepared using the sulfur-containing initiator. The sulfur-containing initiator may have a number average molecular weight from 50 g/mol to 3,000 g/mol (e.g., 50 g/mol to 2,500 g/mol, 75 g/mol to 2,000 g.mol, 100 g/mol to 2,000 g/mol, 100 g/mol to 1,500 g/mol, 110 g/mol to 1,250 g/mol, 110 g/mol to 1,000 g/mol, 110 g/mol to 750 g/mol, 120 g/mol to 500 g/mol, 120 g/mol to 300 g/mol). An exemplary sulfur-containing initiator is thiodiglycol (also referred to as 2,2-thiodiethanol), 2,2'-dithiodiethanol, or combination thereof.

In exemplary embodiments, the sulfur-containing polyol may be a sulfur containing polyalkylene glycol (S-PAG) that is free of oxygen bound directly to sulfur. For example, the S-PAG comprises copolymerized alkylene oxide, such as 1,2-propylene oxide, ethylene oxide, 1,2-butylene oxide, or a combination thereof. In exemplary embodiments, the S-PAG may be free of more than two types of alkylene oxide, e.g., free of more than one alkylene oxide and can be completely free of copolymerized ethylene oxide. The S-PAG may be free of -C₂H₄O- components resulting from polymerization of ethylene oxide. For example, -C₂H₄O- originating from an alcohol initiator (for example, butanol or thiodiglycol) does not contribute a - C₂H₄O- component resulting from polymerization of ethylene oxide to the resulting S-PAG. For instance, the S-PAG can be free of -C₂H₄O- groups that are not bound directly to sulfur.

The S-PAG can have the structure of Structure (I):

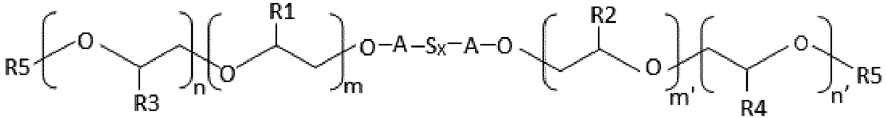

where R1, R2, R3 and R4 are independently selected from a group consisting of methyl (-CH₃) and ethyl (-CH₂CH₃) groups; R5 is hydrogen; x is a number selected from a group consisting of 1 and 2; m, m', n, and n' are independently selected from a number in a range of zero to twenty such that the sum of m, m', n and n' is at least six and A is selected from a group consisting of -C₂H₄- and C₆H₄ groups.

An exemplary S-PAG has the structure of Structure (I) where x is one and A is -C₂H₄. In addition or as an alternative to any combination of these options for Structure (I), R1, R2, R3 and R4 can all be -CH₃ groups. When m, n, m' and n' are each one or more (and e.g., when R1 is not the same as R2 or when R3 is not the same as R4), then the polymer is a random or block copolymer. A random copolymer may occur when the reactive oxides are simultaneously added to the initiator. As the polymer grows the oxides randomly add to the polymer backbone creating a final random copolymer. A block structure may occur when one oxide is added to the initiator and when this has fully reacted then a second oxide is added. The final structure is described as a block structure since it contains blocks of oxides therein.

An exemplary sulfur-containing polyol may be prepared using 2,2-thiodiethanol as the sulfur-containing initiator, which is alkoxylated with propylene oxide and/or ethylene oxide. The sulfur-containing polyol may be further reacted with hydroxy epoxide, such as glycidol, to increase the hydroxyl functionality of the resultant polyol. For example, such a sulfur-containing polyol may have a nominal hydroxyl functionality of 3 and an equivalent weight from 1000 g/mol equivalence to 2000 g/mol equivalence. By selectively adding the hydroxy epoxide at a certain stage of the alkoxylation process for forming the sulfur-containing polyol a higher functionality polyol, such as a triol, may be obtained.

Catalysis for this polymerization of the sulfur-containing polyol may be either anionic or cationic. Exemplary catalysts include potassium hydroxide (KOH), cesium hydroxide (CsOH), boron trifluoride, and double metal cyanide complex (DMC) catalyst such as zinc hexacyanocobaltate or quaternary phosphazenium compound. In the case of alkaline catalysts, these alkaline catalysts may be removed from the polyol at the end of production by a proper finishing step, such as coalescence, magnesium silicate separation or acid neutralization.

In exemplary embodiments, additional sulfite based additives may be included in the isocyanate-reactive component, e.g., such as the sulfur-carbon compound as discussed in International Publication No. WO 2015/082242 and the sulfite with a tertiary amine catalyst forming a catalyst composition as discussed in International Publication No. WO 2016/061068. In other exemplary embodiments, use of compounds that include the SO₃²⁺ ion, may be minimized and/or avoided in the isocyanate-reactive component. In exemplary embodiments, the use of sulfinic based additives, such as sulfinic acids that are oxoacids of sulfur having the general structure R-SO(OH), where R is an organic alkyl or aryl group, may be minimized and/or avoided in the isocyanate-reactive component. In exemplary embodiments, the use of sulfonate based additives, such as sulfinate salts, may be minimized and/or avoided in the isocyanate-reactive component. In exemplary embodiments, the use of sulfonic based additives, such as sulfonic acids having the general structure R-S(=O)₂-OH, where R is an organic alkyl or aryl group and the S(=O)₂-OH group a sulfonyl hydroxide, may be minimized and/or avoided in the isocyanate-reactive component.

### Polyol Component

In addition to the sulfur-containing polyol, the polyol component includes one or more other polyols such as polyether polyols and/or polyester polyols. The polyol component, including the sulfur-containing polyol, may be mixed before contacting the isocyanate component. The overall hydroxyl functionality in the isocyanate-reactive company may be adjusted by blending the sulfur-containing polyol with a polyol component that includes higher functionality polyols, such as polyols having a nominal hydroxyl functionality from 3 to 8.

Exemplary polyether polyols are the reaction product of alkylene oxides (such as at least one ethylene oxide, propylene oxide, butylene oxide, or combinations thereof) with initiators containing from 2 to 8 active hydrogen atoms per molecule. Exemplary initiators include ethylene glycol, diethylene glycol, 1,2-propylene glycol, 1,3-propylene glycol, dipropylene glycol, butane diol, glycerol, trimethylolpropane, triethanolamine, pentaerythritol, dipentaerythritol, sorbitol, ethylene diamine, toluene diamine, diaminodiphenylmethane, polymethylene polyphenylene polyamines, ethanolamine, diethanolamine, and mixtures of such initiators. The initiator used to form the other polyols may exclude sulfur (e.g., only includes one of carbon, oxygen, hydrogen, and/or nitrogen). Exemplary polyols include VORANOL™ and VORALUX™ products, available from The Dow Chemical Company. The polyol component may include polyols that are useable to form viscoelastic polyurethane foams.

For example, the polyol component may include a polyoxyethylene-polyoxypropylene polyether polyol that has an ethylene oxide content of at least 50 wt% (based on a total weight of alkylene oxides used to form the polyol), that has a nominal hydroxyl functionality from 2 to 6 (e.g., 2 to 4), and has a number average molecular weight from 500 g/mol to 5000 g/mol (e.g., 500 g/mol to 4000 g/mol, from 600 g/mol to 3000 g/mol, 600 g/mol to 2000 g/mol, 700 g/mol to 1500 g/mol, and/or 800 g/mol to 1200 g/mol). The polyoxyethylene-polyoxypropylene polyether polyol that has an ethylene oxide content of at least 50 wt% may account for 5 wt% to 90 wt% (e.g., 10 wt% to 85 wt%, 10 wt% to 80 wt%, 15 wt% to 80 wt%, 25 wt% to 70 wt%, 20 wt% to 60 wt%, 25 wt% to 60 wt%, 30 wt% to 55 wt%, and/or 35 wt% to 50 wt%) of the isocyanate-reactive component. The polyoxyethylene-polyoxypropylene polyether polyol that has an ethylene oxide content of at least 50 wt% may be the majority component in the isocyanate-reactive component. The ethylene oxide content may be less than 90 wt%, less than 80 wt%, and/or less than 70 wt%.

The polyol component may include a polyoxypropylene-polyoxyethylene polyether polyol that has an ethylene oxide content of less than 20 wt% (based on a total weight of alkylene oxides used to form the polyol) that has a nominal hydroxyl functionality from 2 to 6 (e.g., 2 to 4) and has a number average molecular weight from 1000 g/mol to 6000 g/mol. For example, the molecular weight may be from 1500 g/mol to 5000 g/mol, 1600 g/mol to 5000 g/mol, 1600 g/mol to 4000 g/mol, 2000 g/mol to 4000 g/mol, and/or 3000 g/mol to 4000 g/mol. The polyoxypropylene-polyoxyethylene polyether polyol that has an ethylene oxide content of less than 20 wt% may account for 5 wt% to 90 wt% (e.g., 5 wt% to 70 wt%, 5 wt% to 50 wt%, 10 wt% to 40 wt%, and/or 15 wt% to 30 wt%) of the isocyanate reactive component. The polyoxypropylene-polyoxyethylene polyether polyol that has an ethylene oxide content of less than 20 wt% may be in a blend with the polyoxypropylene polyether polyol that has an ethylene oxide content of at least 50 wt%, whereas the latter of which is included in a greater amount. The ethylene oxide content may be greater than 5 wt% and/or greater than 10 wt%.

The polyol component may include a polyoxypropylene polyether polyol that has a nominal hydroxyl functionality from 2 to 6 (e.g., 2 to 4) and has a number average molecular weight from 500 g/mol to 5000 g/mol (e.g., 500 g/mol to 4000 g/mol, from 500 g/mol to 3000 g/mol, 500 g/mol to 2000 g/mol, 500 g/mol to 1500 g/mol, and/or 500 g/mol to 1000 g/mol). The polyoxypropylene polyether polyol may account for 5 wt% to 90 wt% (e.g., 5 wt% to 70 wt%, 5 wt% to 50 wt%, 10 wt% to 40 wt%, and/or 10 wt% to 30 wt%) of the isocyanate reactive component. The polyol component may include the sulfur-containing polyol in place of a polypropylene glycol having a number average molecular weight of less than 1,000 g/mol. For example, the sulfur-containing polyol may be a sulfur-containing glycol that replaces a polypropylene glycol in the polyol component.

The polyoxypropylene polyether polyol may be in a blend with the polyoxypropylene polyether polyol that has an ethylene oxide content of at least 50 wt%, whereas the latter of which is included in a greater amount. In an exemplary embodiment, the polyol component may include a blend of the polyoxyethylene-polyoxypropylene polyether polyol that has an ethylene oxide content of at least 50 wt%, the polyoxyethylene-polyoxypropylene polyether polyol that has an ethylene oxide content of less than 20 wt%, and the polyoxypropylene polyether polyol.

The polyol component may include one or more polyester polyols. For example, polyester polyols known in the art for forming polyurethane polymers may be used. The isocyanate-reactive component may include polyols with fillers (filled polyols). The filled polyols may contain one or more copolymer polyols with polymer particles as a filler dispersed within the copolymer polyols. Exemplary filled polyols include styrene/acrylonitrile (SAN) based filled polyols, polyharnstoff dispersion (PHD) filled polyols, and polyisocyanate polyaddition products (PIPA) based filled polyols. In exemplary embodiments, polyol component may exclude any SANs-type polymer polyol. In this way a source of VOCs (such as residual styrene and acrylonitrile monomers) may be eliminated.

The isocyanate-reactive component may include a primary hydroxyl containing alcohol, such as a polybutadiene, a polytetramethylene ether glycol (PTMEG), a polypropylene glycol (PPG), a polyoxypropylene, and/or a polyoxyethylene-polyoxypropylene. In exemplary embodiments, the polyol component may include the sulfur-containing polyol, such as a sulfur-containing glycol, in place of another glycols (e.g., so as to minimize, reduce, and/or exclude the use of non-sulfur containing glycols) in the isocyanate-reactive component.

The polyol component may include one or more chain extenders and/or crosslinkers. Exemplary, chain extenders and crosslinkers include alkylene glycols (such as ethylene glycol, 1,2- or 1,3-propylene glycol, 1,4-butanediol, and 1,6-hexanediol), glycol ethers (such as diethylene glycol). Processing aids, chain extenders, or crosslinkers having sulfur moieties that may be used in the isocyanate-reactive component be 2,2'-thiodiethanol, thioglycerol, 2-(ethylthio)ethanol, 2,2'-dithiodiethanol, bis (2-hydroxyethylthio) methane, and 3-methylthio-1-propanamine.

The isocyanate-reactive component may include polyamines that are known in the art for use in forming polyurethane-polyurea polymers. In exemplary embodiments, the isocyanate-reactive component may include alkoxylates of ammonia or primary or secondary amine compounds, e.g., as aniline, toluene diamine, ethylene diamine, diethylene triamine, piperazine, and/or aminoethylpiperazine.

### Additive Component

The additive component is separate from the components that form the preformed aqueous dispersion and the polyol component. The additive component is part of the isocyanate-reactive component, but other additives may be incorporated into the isocyanate component. The additive component may include a catalyst, a curing agent, a crosslinker, a cell opener, a surfactant, a blowing agent, a preformed aqueous polymer dispersion, a preformed aqueous polymer dispersant a polyamine, a plasticizer, a fragrance, a pigment/dye, an antioxidant, a UV stabilizer, water (separate from the aqueous polymer dispersion), and/or a filler. Other exemplary additives include a chain extender, flame retardant, smoke suppressant, drying agent, a reinforcing agent, talc, powder, mold release agent, plasticizer, paraffin oil, plant or animal oil or fat, epoxidized vegetable oils and/or animal fats, wax particles, rubber polymer ("gel") particles, and other additives that are known in the art for use in viscoelastic foams and viscoelastic foam products.

In exemplary embodiments, an additional amount of antioxidant as an additive in the additive component may be included, may be excluded and/or the use of which may be reduced relative to when the sulfur-containing polyol is not included in composition for forming the polyurethane product. Exemplary antioxidants that may be used, excluded, or use of which reduced, include free radical scavengers, peroxide decomposers, and phenolic antioxidants. Examples of free radical scavengers include aromatic based aminic antioxidants such as alkylated diphenylamines and phenyl-alpha-naphthylamine and alkylated phenyl-alpha-naphthylamines. The antioxidant may comprise hindered phenolic anti-oxidants, such as butylated hydroxytoluene, octadecyl-3-(3,5-di-tert.butyl-4-hydroxyphenyl)- propionate, pentaerythritol tetrakis tetrakis(3-(3,5-di-tert-butyl-4- hydroxyphenyl)propionate), benzene propanoic acid, 3,5-bis(1,1-dimethylethyl)-4-hydroxy', and C7-9-branched alkyl ester. Other examples of antioxidants include peroxide decomposer antioxidants such as carbamate type antioxidants (e.g., alkylated dithiocarbamates).

The additive component may include tin catalyst, zinc catalyst, bismuth catalyst, and/or amine catalyst. The total amount of catalyst in the isocyanate-reactive component may be from 0.1 wt% to 5.0 wt%.

A surfactant may be included in the additive component, e.g., to help stabilize the foam as it expands and cures. Examples of surfactants include nonionic surfactants and wetting agents such as those prepared by the sequential addition of propylene oxide and then ethylene oxide to propylene glycol, solid or liquid organosilicones, and polyethylene glycol ethers of long chain alcohols. Ionic surfactants such as tertiary amine or alkanolamine salts of long chain alkyl acid sulfate esters, alkyl sulfonic esters, and alkyl arylsulfonic acids may be used. For example, the formulation may include a surfactant such as an organosilicone surfactant. The total amount of an organosilicone surfactant in the isocyanate-reactive component may be from 0.1 wt% to 5.0 wt%, 0.1 wt% to 3.0 wt%, 0.1 wt% to 2.0 wt%, and/or 0.1 wt% to 1.0 wt%.

The additive component may include water, which is separate from the preformed aqueous polymer dispersion. The water may account for less than 2.0 wt% of the total weight of isocyanate-reactive component. The total water, including water from the preformed aqueous polymer dispersion and water from the additive component, may account for less than 5 wt% of the total weight of isocyanate-reactive component.

The additive component may include from 0.1 wt% to 6.0 wt% of a preformed aqueous polymer dispersion, based on the total weight of the isocyanate-reactive component, e.g., as discussed in International Publication No. WO 2016/100263. The preformed aqueous polymer dispersion has a solids content from 10 wt% to 80 wt%, based on the total weight of the preformed aqueous polymer dispersion, and or one of an aqueous acid polymer dispersion or an aqueous acid modified polyolefin polymer dispersion in which the polyolefin is derived from at least one C₂ to C₂₀ alpha-olefin.

The additive component may include from 0.1 wt% to 6.0 wt% of a preformed aqueous polymer dispersant having a pH from 6.0 to 12.0, based on the total weight of the isocyanate-reactive component, e.g., as discussed in International Application No. PCT/US16/036603. The aqueous polymer dispersant includes from 5 wt% to 60 wt% of a polymeric component and from 40 wt% to 95 wt% of a fluid medium that includes at least water. The polymeric component includes at least one base polymer derived from 20 wt% to 100 wt% of at least one hydrophilic acid monomer having at least one carbonyl group, phosphate group, phosphonate group, or sulfonyl group, and optionally derived from at least one hydrophobic terminally unsaturated hydrocarbon monomer.

Exemplary flame retardants may be solid or liquid. For example, non-halogenated flame retardants and/or one or more halogenated flame retardants may be used.

### Isocyanate Component

The isocyanate component includes at least one isocyanate. The isocyanate component is present at an isocyanate index from 50 to 110 (e.g., from 60 to 100, from 65 to 100, from 70 to 100, from 74 to 100, from 70 to 90, from 70 to 85, and/or from 74 to 85). The isocyanate index is defined as the molar stoichiometric excess of isocyanate moieties in a reaction mixture with respect to the number of moles of isocyanate-reactive units (active hydrogens available for reaction with the isocyanate moiety), multiplied by 100. An isocyanate index of 100 means that there is no stoichiometric excess, such that there is 1.0 mole of isocyanate groups per 1.0 mole of isocyanate-reactive groups, multiplied by 100.

The isocyanate component may include one or more isocyanate such as polyisocyanate and/or isocyanate-terminated prepolymer. The isocyanate may be isocyanate-containing reactants that are aliphatic, cycloaliphatic, alicyclic, arylaliphatic, and/or aromatic polyisocyanates or derivatives thereof. Exemplary derivatives include allophanate, biuret, and NCO (isocyanate moiety) terminated prepolymer. For example, the isocyanate component may include at least one aromatic isocyanate, e.g., at least one aromatic polyisocyanate or at least one isocyanate-terminated prepolymer derived from an aromatic polyisocyanate. The isocyanate component may include at least one isomer of toluene diisocyanate (TDI), crude TDI, at least one isomer of diphenyl methylene diisocyanate (MDI), crude MDI, and/or higher functional methylene polyphenyl polyisocyanate. Examples include TDI in the form of its 2,4 and 2,6-isomers and mixtures thereof and MDI in the form of its 2,4'-, 2,2'- and 4,4'-isomers and mixtures thereof. The mixtures of MDI and oligomers thereof may be crude or polymeric MDI and/or a known variant of MDI comprising urethane, allophanate, urea, biuret, carbodiimide, uretonimine and/or isocyanurate groups. Exemplary isocyanates include VORANATE™ M 220 (a polymeric methylene diphenyl diisocyanate available from The Dow Chemical Company). Other exemplary polyisocyanate include tolylene diisocyanate (TDI), isophorone diisocyanate (IPDI) and xylene diisocyanates (XDI), and modifications thereof. In exemplary embodiments, the isocyanate component may only include one or more aromatic diisocyanates. For example, the isocyanate component may only include TDI and/or MDI.

### Polyurethane Product

The polyurethane product may be useful in a variety of packaging applications, comfort applications (such as mattresses - including mattress toppers, pillows, furniture, seat cushions) shock absorber applications (such as bumper pads, sport and medical equipment, helmet liners), noise and/or vibration dampening applications (such as earplugs, automobile panels), apparel and filtration applications (such as vacuum air filters, gutter guards for protecting rain gutter/rain catcher against debris such as plant leaves and melting snow).

Various polyurethane products may be prepared using the reaction system. For example, the polyurethane product may be a viscoelastic polyurethane foam having a resiliency that is less than or equal to 20 %, as measured according to ASTM D-3574. The polyurethane product may be a flexible polyurethane foam having a resiliency that is greater than 20 %, as measured according to ASTM D-3574. The polyurethane product may be a polyurethane layer
(such as an elastomer, coating, sealant, and/or adhesive) having a Shore OO hardness of from 5 to 100, according to ASTM D-2240. The polyurethane product may be a polyurethane layer having a Shore A hardness of from 5 to 100, according to ASTM D-2240. The polyurethane product may be a rigid polyurethane foam has a low k-factor, e.g., less than 22 mW/m^{∗}K. Whereas, the k factor is a measure of the amount of heat that is transferred through the foam per unit area per unit time, taking into account the thickness of the foam and the applied temperature difference across the foam thickness.

The polyurethane product (such as a foam) may be prepared in a slabstock process (e.g., as free rise foam), a molding process (such as in a box foaming process), or any other process known in the art. In a slabstock process, the components may be mixed and poured into a trough or other region where the formulation reacts, expands freely in at least one direction, and cures. Slabstock processes are generally operated continuously at commercial scales. In a molding process, the components may be mixed and poured into a mold/box (heated or non-heated) where the formulation reacts, expands without the mold in at least one direction, and cures.

The polyurethane product may be prepared at initial ambient conditions (i.e., room temperature ranging from 20 °C to 25 °C and standard atmospheric pressure of approximately 1 atm). Foaming at pressure below atmospheric condition can also be done, to reduce foam density and soften the foam. Foaming at pressure above atmospheric condition can be done, to increase foam density and therefore the foam load bearing as measured by indentation force deflection (IFD). In a molding processing, the viscoelastic polyurethane product may be prepared at initial mold temperature above ambient condition, e.g., 50 °C and above. Overpacking of mold, i.e. filling the mold with extra foaming material, can be done to increase foam density.

If necessary, heat may be applied to the reaction mixture for forming the polyurethane product to speed-up the curing reaction. For example, this may be done by heating some or all of the ingredients prior to combining them, by applying heat to the reaction mixture, or some combination of each. Curing may be continued until the reaction mixture has expanded and cured sufficiently to form a stable foam. In exemplary embodiments, the curing step may be performed in a closed mold. In such a process, the reaction mixture is either formed in the mold itself, or formed outside the mold and then injected into the mold, where it cures. The expansion of the reaction mixture as it cures is therefore constrained by the internal surfaces of the mold, as are the size and geometry of the molded part.

In exemplary embodiments, the curing step may be performed in a free-rise (or slabstock) process. In the free-rise process, the reaction mixture is poured into an open container such that expansion in at least one direction (usually the vertical direction) occurs against the atmosphere or a lightweight surface (such as a film) that provides negligible resistance to the expansion of the foam. In the free-rise process, the reaction mixture expands in at least one direction essentially unconstrained except by its own weight. The free-rise process may be performed by forming the reaction mixture and dispensing it into a trough or onto a conveyor where it expands and cures. In a continuous free-rise process, the reaction mixture may be continuously dispensed into a trough or other reaction zone where it rises and expands.

All parts and percentages are by weight unless otherwise indicated. All molecular weight data is based on number average molecular weight, unless indicated otherwise.

### Examples

Approximate properties, characters, parameters are provided below with respect to various working examples, comparative examples, and the materials used in the working and comparative examples.

### Synthesis of Sulfur-Containing Polyol

With respect to the Working Examples 1-3, below, a sulfur-containing polyol referred to as S-PAG is prepared according to the following proceed. In particular, 1190 grams of 2,2'-thiodiethanol are loaded into a stainless steel alkoxylation reactor, equipped with a stirrer, an alkylene oxide dosing system, a temperature control system, and the means to apply vacuum. Next, 26.5 grams of a 45% aqueous KOH solution are added to the reactor as a catalyst, and the reactor is closed and the air is replaced with nitrogen. Then, the reactor is heated to 115 °C and vacuum is applied at 30 mbar for 120 minutes such that water is removed (so that the water concentration is less than 3000 ppm). Next, the reactor is further heated to 130 °C and 4750 grams of 1,2-propylene oxide are added to the reactor over a period of 6 hours. Once the propylene oxide has been added the feed is stopped and the reactor is kept at 130 °C for an additional 6 hours to allow the remaining oxide to react. Then, the resultant polyglycol is treated with magnesium silicate and filtered to remove the catalyst. The resultant S-PAG product has a kinematic viscosity at 40 °C of 45.8 centistokes (cSt), a viscosity at 100 °C of 6.96 cSt, a viscosity index of 109, and a hydroxyl number of 188.0 mg KOH/g. Based on the hydroxyl number the sulfur content is calculated as approximately 5 wt%, based on a total weight of the S-PAG. The S-PAG includes the polyglycol having the Structure (I) where R1, R2, R3 and R4 are each methyl, R5 is hydrogen and, on average, the sum of m, m', n and n' is 8.4.

Other exemplary sulfur-containing polyols and methods of preparing such polyols are discussed in, e.g., PCT Application No. PCT/US16/047273, U.S. Provisional 62/354,292, and U.S. Provisional No. 62/354,296. For example, such other sulfur-containing polyols usable in polyurethane foams include a butylene oxide homopolymer of 2,2'-thiodiethanol and a propylene oxide/butylene oxide random copolymer of 2,2'-thiodiethanol.

In particular, the butylene oxide homopolymer of 2,2'-thiodiethanol may be prepared using the same process as above, except 582 grams of 2,2'-thiodiethanol, 13.9 grams of the 45 wt% aqueous potassium hydroxide solution, and 2514 grams of 1,2-butylene oxide are added used. The resultant product has a kinematic viscosity at 40°C of 50.7 cSt, at 100 °C of 6.80 cSt, a viscosity index of 84, and a hydroxyl number of 179.0 mg KOH/g. The product includes a polyglycol having the Structure (I) where R1, R2, R3 and R4 are each ethyl, R5 is hydrogen and on average, the sum of m, m', n and n' is 7.3. The propylene oxide/butylene oxide random copolymer of 2,2'-thiodiethanol may be prepared using the same process as above, except 600 grams of 2,2'-thiodiethanol, 14.2 grams of the 45 wt% aqueous potassium hydroxide solution, and 2590 grams of a 50/50 weight mixture of 1,2-propylene oxide and 1,2 butylene oxide are used. The resultant product has a kinematic viscosity at 40 °C of 48.7 cSt, at 100 °C of 7.05 cSt, a viscosity index of 101, and a hydroxyl number of 179.0 mg KOH/g. The product includes a polyglycol having the Structure (I) where R1 and R2 are methyl, R3 and R4 are ethyl, on average m+m' is 4.5, n+n' is 3.7.

### Polyurethane Products

Polyurethane formulations and product samples are prepared as discussed below:

| | |
|---|---|
| Polyol 1 | A glycerine initiated polyoxyethylene-polyoxypropylene polyether polyol, having an ethylene oxide content of approximately 60 wt% (based on a total weight of alkylene oxides used to form the polyol), a nominal hydroxyl functionality of 3, primary hydroxyl content of approximately 35%, and a number average molecular weight of approximately 1000 g/mol. |
| Polyol 2 | A polyether polyol that is a heteropolymer, having a nominal hydroxyl functionality of 3 and a number average |
| | molecular weight of approximately 3500 g/mol (available as VORANOL™ 3322 from The Dow Chemical Company). |
| Polyol 3 | A polyether polyol, having a nominal hydroxyl functionality of 3 and a number average molecular weight of approximately 700 g/mol (available as VORALUX™ HT 760 from The Dow Chemical Company). |
| Polyol 4 | A polypropylene glycol having a number average molecular weight of approximately 400 g/mol (available as VORANOL™ P400 from The Dow Chemical Company). |
| Isocyanate | A methylene diphenyl diisocyanate product (available as SPECFLEX™ NE 112 from The Dow Chemical Company). |
| Surfactant | An organosilicone surfactant (available as Niax™ L-620 from Momentive Performance Materials). |
| Amine 1 | An amine catalyst (available Niax™ A-1 from Air Products). |
| Amine 2 | A tertiary amine catalyst (available as Dabco® 33-LV from Air Products). |
| Tin | A 2-ethylhexanoate catalyst (available as KOSMOS® 29 from Evonik). |
| DI | Deionized Water. |

Working Examples 1 to 3 and Comparative Example A are prepared according to the approximate formulations in Table 1, below. For each of Working Examples 1 to 3 and Comparative Example A, foam samples are prepared by free-rise foaming at ambient conditions in a standard 20 cm × 20 cm × 20 cm box. The foam samples are prepared according to a standardized hand-mix procedure.

**Table 1**

| | **Working Ex. 1** | **Working Ex. 2** | **Working Ex. 3** | **Comp. Ex. A** |
|---|---|---|---|---|
| **Isocyanate-Reactive Component** (amount based on parts by weight) | | | | |
| S-PAG | 5.0 | 10.0 | 15.0 | -- |
| Polyol 1 | 47.0 | 45.0 | 43.0 | 45.0 |
| Polyol 2 | 24.0 | 22.5 | 21.0 | 22.5 |
| Polyol 3 | 24.0 | 22.5 | 21.0 | 22.5 |
| Polyol 4 | -- | -- | -- | 10.0 |
| Surfactant | 0.8 | 0.8 | 0.8 | 0.8 |
| Amine 1 | 0.3 | 0.3 | 0.3 | 0.3 |
| Amine 2 | 0.1 | 0.1 | 0.1 | 0.1 |
| Tin | < 0.1 | < 0.1 | < 0.1 | < 0.1 |
| Water | 2.0 | 2.0 | 2.0 | 2.0 |

| **Isocyanate Component** (amount based on parts by weight) | | | | |
|---|---|---|---|---|
| Isocyanate 1 | 57.1 | 55.4 | 55.6 | 57.1 |

| **Composition Properties** | | | | |
|---|---|---|---|---|
| Isocyanate Index | 84 | 84 | 84 | 84 |
| Total Parts by Weight | 160.3 | 158.6 | 158.8 | 160.3 |
| Calculated Sulfur Amount (wt% in composition) | 0.15 | 0.30 | 0.45 | 0 |

| **Foam Properties** | | | | |
|---|---|---|---|---|
| Air Flow (uncrushed - scfm) | 4.5 | 2 | 2 | 9 |
| Density (kg/m³) | 48 | 50 | 49.2 | 44.3 |
| Average Resiliency (%) | 5 | 5 | 5 | 6 |
| CFD 40% (KPa) | 1.5 | 2 | 2 | 1.3 |
| SAG Factor | 2.9 | 2.6 | 2.7 | 3.5 |
| Hysteresis (%) | 38 | 37 | 38 | 41 |
| Tear Strength (N/m) | 310 | 302 | 298 | 343 |
| CS @ 90% CT (%) | 0.3 | 0.7 | 0.7 | 0.2 |
| CS @ 75% CT (%) | 1.4 | 1.9 | 1.8 | 1.2 |
| Wet CS @ 75% (%) | 0 | -1.2 | -1.1 | 1.1 |
| Tightness (scale 1-10) | 1 | 1 | 1 | 0 |
| **Flammability Test | | | | |
| Weight loss (%) | 87 | 83 | 65 | 90 |
| Burning time (s) | 75 | 98 | 122 | 58 |
| ** UV Resistance Effect | | | | |
| **Y (first day)** | 80.14 | 80.10 | 80.02 | 80.06 |
| Darkness level (first day) | 1 | 1 | 1 | 1 |
| **Y (after four weeks)** | 74.89 | 78.89 | 79.85 | 60.68 |
| Darkness level (four weeks) | 2 | 1 | 1 | 4 |
| Total Δ Y (% reflection) | 5.25 | 1.11 | 0.17 | 19.38 |
| **Y (after seven weeks)** | 73.63 | 77.04 | 78.71 | 57.12 |
| Darkness level (seven weeks) | 2 | 1 | 1 | 6 |
| Total Δ Y (% reflection) | 6.51 | 3.06 | 1.21 | 22.97 |
| **Y (after twenty weeks)** | 71.2 | 77.0 | 78.7 | 48.5 |
| Darkness level (twenty weeks) | 3 | 1 | 1 | 7 |
| Total Δ Y (% reflection) | 7.2 | 3.1 | 1.2 | 26.3 |

Firstly, a liquid sample is prepared using the components in Table 1. In particular, the components in the Isocyanate-Reactive Component, with the exception of the Tin catalyst, are mixed first for 30 seconds at 2500 rpm with a propeller mixer. Then, the Tin catalyst is added, and stirring is continued for an additional 10 seconds at 2500 rpm with the propeller mixer. After an additional 40 seconds of mixing time, the Isocyanate is added and stirred for an additional 10 seconds. Secondly, the resultant liquid sample is poured into the box. The foam is observed as having reached maximum height when bubbles appear at the top surface of the foam. Rise time and settling are measured. After finishing the foam processing, the foam samples are post cured in the oven with warm air circulation at 140 °C for a period of at least 5 minutes prior to further testing of the foam properties. Eventually, the foams are crushed and data related to their tightness is recorded.

Referring to Working Examples 1 to 3, improved flammability test results are realized for polyurethane products prepared using the sulfur-containing polyol according to exemplary embodiments. Further, it is found that improved UV resistance is found for polyurethane products prepared using the sulfur-containing polyol. In particular, referring to FIG. 1, it shown that light resistance (%) is improved for the Working Examples 1-3 (labeled by the respective sulfur content) relative to the Comparative Example A (labeled by 0% sulfur content). Further, when the sulfur-containing polyol according to exemplary embodiments is not present a rapid loss of whiteness is realized. Also, when the sulfur-containing polyol is present increased light stability, which with respect to Working Examples 1-3 is shown to increase as the sulfur content in the formulation increases, and decreased darkening of the resultant polyurethane product is realized of a period of at least 20 weeks as well as good foam properties.

Air flow is a measure of the air that is able to pass through the foam under a given applied air pressure. Air flow is measured as the volume of air which passes through a 1.0 inch (2.54 cm) thick x 2 inch x 2 inch (5.08 cm) square section of foam at 125 Pa (0.018 psi) of pressure. Units are expressed in standard cubic feet per minute (scfm). A representative commercial unit for measuring air flow is manufactured by TexTest AG of Zurich, Switzerland and identified as TexTest Fx3300. Herein, air flow is measured according to ASTM D 3574.

Density is the weight per unit volume of a foam. The density is determined according to the procedures of ASTM D-3574-01, Test A.

Average resiliency is measured according to ASTM D 3574, Test H, in particular using the ball rebound test. The ball rebound test measures the height a dropped steel ball of known weight rebounds from the surface of the foam when dropped under specified conditions and expresses the result as a percentage of the original drop height. As measured according to the ASTM test, cured viscoelastic foam may exhibits a resiliency of 20 % or less (e.g., 10 % or less).

The SAG factor, which is also referred to as a support factor, refers to the ratio of 65% Compression Force Deflection (CFD 65%) divided by 25% Compression Force Deflection (CFD 25%). In particular, CFD 25% refers to a compression force deflection measurement where a foam 4 x 4 inches in the lateral direction and 2 inches thick (10.16 x 10.16 x 5.08 cm) is compressed down in the thickness-axis to a compression strain of 25%, and held for one minute before the compression force deflection measurement is determined, i.e., the foam is compressed to 75%, of its original thickness, according to the procedures of ASTM D 3574 C and is measured in kilopascals (kPa). CFD 40% and CFD 65% similarly corresponds to a compression to 60% and 35% of the original foam thickness, respectively.

Hysteresis is measured according to ASTM D 3574 C. Tear strength, as used herein, refers to the maximum average force required to tear a foam sample which is pre-notched with a slit cut lengthwise into the foam sample. The test results are determined according to the procedures of ASTM D3574-F in Newtons per meter (N/m).

CS refers to compression set. Compression Set @ 90% stands for compression set test measured at the 90% compressive deformation level and parallel to the rise direction in the foam. Similarly, Compression Set @ 75% stands for compression set test measured at 75% compression deformation level and parallel to the rise direction in the foam. This test is used herein to correlate in-service loss of cushion thickness and changes in foam hardness. The compression set is determined according to the procedures of ISO 1856, Test I, and is measured as percentage of original thickness of the sample.

Wet CS is measured after according to ISO 13362.

Tightness, which is reported on a scale of from 1 to 10, is manually evaluated by an operator at the time of crushing the foam sample after curing.

The flammability test refers to a small scale fire test which resembles the Crib 5 (BS 5852). It has been confirmed that the data of this test are reproducible and repeatable. Also, they are in correlation with Crib 5 test results. The samples for this test are cut into 12 cm × 12 cm × 7.5 cm samples. Then a 3×3 cm paper and 1.4 ml of isopropanol is applied for this test to the sample. The test is then performed in a chamber and fume hood as set forth for the Crib 5 test.

For evaluation of UV resistance effect, the color of the surface of foam samples, after exposing to the sun light over the specified period of time, is examined. A Chroma-Meter CR-210 color measuring instrument is used. By this method, the absolute measurement as Yxy (CIE 1931) or whiteness is selected for the samples. Color difference is measured as Δ (Yxy). The white color is selected for the calibration with Y=94.2, x=0.3133, and y=0.3196. Y is the reflection percentage and shows the brightness or darkness of the color. Further, x and y shows the location of each color in chromatic diagram of C.I.E 1931. Also, ΔY_{w}, Δx_{w}, and Δy_{w} is reported in comparison with white color Y, x and y values. ΔY_{c}, Δx_{c} and Δy_{c} are the differentiation results compare to the fresh foams color before exposing to the light. The darkness of the samples is reported as a quantitative numbering between 1-10. Scaling of the reported results is based on the instrument color evaluation definitions.

## Claims

1. A reaction system for forming a polyurethane product, the system
comprising:
an isocyanate component; and
an isocyanate-reactive component including a sulfur-containing polyether polyol that is an alkoxylated sulfur-containing initiator, having a Structure (I) 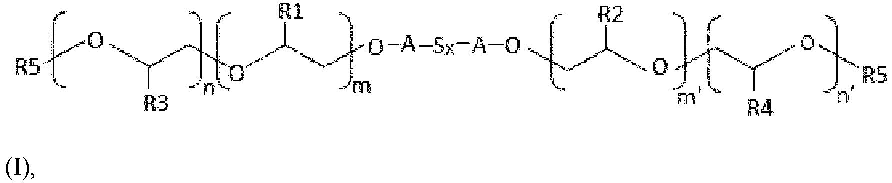 whereas R1, R2, R3 and R4 are independently selected from a group consisting of methyl (-CH₃) and ethyl (-CH₂CH₃) groups; R5 is hydrogen; x is a number selected from a group consisting of 1 and 2; m, m', n, and n' are independently selected from a number in a range of zero to twenty such that the sum of m, m', n and n' is at least six and A is selected from a group consisting of -C₂H₄- and C₆H₄ groups;
the sulfur-containing polyether polyol having a number average molecular weight from 400 g/mol to 10,000 g/mol and the sulfur-containing initiator having another number average molecular weight that is less than the number average molecular weight of the sulfur-containing polyether polyol,
the composition having a sulfur content from 0.1 wt% to 3.0 wt%, based on a total weight of the composition.

2. The reaction system as claimed in claim 1, wherein the sulfur-containing polyether polyol is present in an amount from 3 wt% to 40 wt%, based on a total weight of the isocyanate-reactive component.

3. The reaction system as claimed in any one of claims 1 to 2, wherein the sulfur-containing initiator is thiodiglycol, 2,2'-dithiodiethanol, or a combination thereof.

4. The reaction system as claimed in any one of claims 1 to 3, wherein the isocyanate-reactive component further includes:
a first polyoxyethylene-polyoxypropylene polyether polyol that has an ethylene oxide content of at least 50 wt%, has a nominal hydroxyl functionality from 2 to 6, has a molecular weight from 500 g/mol to 5000 g/mol, and accounts for 10 wt% to 80 wt% of the isocyanate-reactive component,
a second polyoxypropylene-polyoxyethylene polyether polyol that has an ethylene oxide content of less than 20 wt%, has a nominal hydroxyl functionality from 2 to 6, has a molecular weight from 1000 g/mol to 6000 g/mol, and accounts for 5 wt% to 70 wt% of the isocyanate-reactive component, and
a polyoxypropylene polyether polyol that has a nominal hydroxyl functionality from 2 to 6, has a molecular weight from 500 g/mol to 5000 g/mol, and accounts for 5 wt% to 70 wt% of the isocyanate-reactive component.

5. The reaction system as claimed in any one of claims 1 to 3, wherein the isocyanate-reactive component further includes:
a first polyoxyethylene-polyoxypropylene polyether polyol that has an ethylene oxide content of at least 50 wt%, has a nominal hydroxyl functionality from 2 to 4, has a molecular weight from 700 g/mol to 1500 g/mol, and accounts for 25 wt% to 60 wt% of the isocyanate-reactive component,
a second polyoxypropylene-polyoxyethylene polyether polyol that has an ethylene oxide content of less than 20 wt%, has a nominal hydroxyl functionality from 2 to 4, has a molecular weight from 1600 g/mol to 4000 g/mol, and accounts for 10 wt% to 40 wt% of the isocyanate-reactive component, and
a polyoxypropylene polyether polyol that has a nominal hydroxyl functionality from 2 to 4, has a molecular weight from 500 g/mol to 2000 g/mol, and accounts for 10 wt% to 40 wt% of the isocyanate-reactive component.

6. A viscoelastic polyurethane foam prepared using the reaction system for forming a polyurethane product as claimed in any one of claims 1 to 5, the viscoelastic polyurethane foam having a resiliency that is less than or equal to 20 %, as measured according to ASTM D-3574.

7. A flexible polyurethane foam prepared using the reaction system for forming a polyurethane product as claimed in any one of claims 1 to 5, the flexible polyurethane foam having a resiliency that is greater than 20 %, as measured according to ASTM D-3574.

8. A polyurethane layer preparing using the reaction system for forming a polyurethane product as claimed in any one of claims 1 to 5, the polyurethane elastomer having a Shore OO hardness of from 5 to 100, according to ASTM D-2240.

9. A polyurethane layer prepared using the reaction system for forming a polyurethane product as claimed in any one of claims 1 to 5, the polyurethane film having a Shore A hardness of from 5 to 100, according to ASTM D-2240.

## Patentansprüche

1. Ein Reaktionssystem zum Bilden eines Polyurethanprodukts, wobei das System Folgendes beinhaltet:
eine Isocyanatkomponente; und
eine isocyanatreaktive Komponente, umfassend ein schwefelhaltiges Polyetherpolyol, das ein alkoxylierter schwefelhaltiger Initiator ist, mit einer Struktur (I) 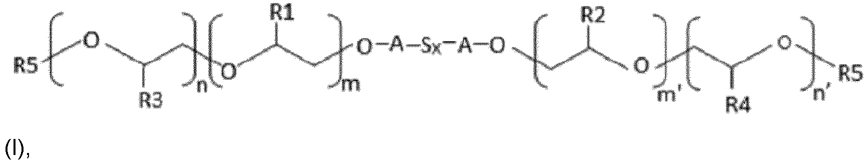 wobei R1, R2, R3 und R4 unabhängig ausgewählt sind aus einer Gruppe, bestehend aus Methyl(-CH₃)- und Ethyl(-CH₂CH₃)-Gruppen; R5 Wasserstoff ist; x eine Zahl, ausgewählt aus einer Gruppe, bestehend aus 1 und 2, ist; m, m', n und n' unabhängig ausgewählt sind aus einer Zahl in einem Bereich von null bis zwanzig, sodass die Summe von m, m', n und n' mindestens sechs ist, und A ausgewählt ist aus einer Gruppe, bestehend aus den Gruppen -C₂H₄- und C₆H₄;
das schwefelhaltige Polyetherpolyol ein zahlenmittleres Molekulargewicht von 400 g/mol bis 10 000 g/mol aufweist und der schwefelhaltige Initiator ein weiteres zahlenmittleres Molekulargewicht aufweist, das kleiner ist als das zahlenmittlere Molekulargewicht des schwefelhaltigen Polyetherpolyols,
wobei die Zusammensetzung einen Schwefelgehalt von 0,1 Gew.-% bis 3,0 Gew.-% aufweist, bezogen auf das Gesamtgewicht der Zusammensetzung.

2. Reaktionssystem gemäß Anspruch 1, wobei das schwefelhaltige Polyetherpolyol in einer Menge von 3 Gew.-% bis 40 Gew.-% vorhanden ist, bezogen auf ein Gesamtgewicht der isocyanatreaktiven Komponente.

3. Reaktionssystem gemäß einem der Ansprüche 1 bis 2, wobei der schwefelhaltige Initiator Thiodiglycol, 2,2'-Dithiodiethanol oder eine Kombination davon ist.

4. Reaktionssystem gemäß einem der Ansprüche 1 bis 3, wobei die isocyanatreaktive Komponente ferner Folgendes umfasst:
ein erstes Polyoxyethylen-Polyoxypropylen-Polyetherpolyol, das einen Ethylenoxidgehalt von mindestens 50 Gew.-% aufweist, eine nominelle Hydroxylfunktionalität von 2 bis 6 aufweist, ein Molekulargewicht von 500 g/mol bis 5 000 g/mol aufweist und 10 Gew.-% bis 80 Gew.-% der isocyanatreaktiven Komponente ausmacht,
ein zweites Polyoxypropylen-Polyoxyethylen-Polyetherpolyol, das einen Ethylenoxidgehalt von weniger als 20 Gew.-% aufweist, eine nominelle Hydroxylfunktionalität von 2 bis 6 aufweist, ein Molekulargewicht von 1 000 g/mol bis 6000 g/mol aufweist und 5 Gew.-% bis 70 Gew.-% der isocyanatreaktiven Komponente ausmacht, und
ein Polyoxypropylen-Polyetherpolyol, das eine nominelle Hydroxylfunktionalität von 2 bis 6 aufweist, ein Molekulargewicht von 500 g/mol bis 5 000 g/mol aufweist und 5 Gew.-% bis 70 Gew.-% der isocyanatreaktiven Komponente ausmacht.

5. Reaktionssystem gemäß einem der Ansprüche 1 bis 3, wobei die isocyanatreaktive Komponente ferner Folgendes umfasst:
ein erstes Polyoxyethylen-Polyoxypropylen-Polyetherpolyol, das einen Ethylenoxidgehalt von mindestens 50 Gew.-% aufweist, eine nominelle Hydroxylfunktionalität von 2 bis 4 aufweist, ein Molekulargewicht von 700 g/mol bis 1 500 g/mol aufweist und 25 Gew.-% bis 60 Gew.-% der isocyanatreaktiven Komponente ausmacht,
ein zweites Polyoxypropylen-Polyoxyethylen-Polyetherpolyol, das einen Ethylenoxidgehalt von weniger als 20 Gew.-% aufweist, eine nominelle Hydroxylfunktionalität von 2 bis 4 aufweist, ein Molekulargewicht von 1 600 g/mol bis 4 000 g/mol aufweist und 10 Gew.-% bis 40 Gew.-% der isocyanatreaktiven Komponente ausmacht, und
ein Polyoxypropylen-Polyetherpolyol, das eine nominelle Hydroxylfunktionalität von 2 bis 4 aufweist, ein Molekulargewicht von 500 g/mol bis 2 000 g/mol aufweist und 10 Gew.-% bis 40 Gew.-% der isocyanatreaktiven Komponente ausmacht.

6. Ein viskoelastischer Polyurethanschaum, der unter Verwendung des Reaktionssystems zum Bilden eines Polyurethanprodukts gemäß einem der Ansprüche 1 bis 5 hergestellt ist, wobei der viskoelastische Polyurethanschaum eine Elastizität aufweist, die kleiner als oder gleich 20 % ist, wie gemäß ASTM D-3574 gemessen.

7. Ein flexibler Polyurethanschaum, der unter Verwendung des Reaktionssystems zum Bilden eines Polyurethanprodukts gemäß einem der Ansprüche 1 bis 5 hergestellt ist, wobei der flexible Polyurethanschaum eine Elastizität aufweist, die größer als 20 % ist, wie gemäß ASTM D-3574 gemessen.

8. Eine Polyurethanschicht, die unter Verwendung des Reaktionssystems zum Bilden eines Polyurethanprodukts gemäß einem der Ansprüche 1 bis 5 hergestellt ist, wobei das Polyurethanelastomer eine Shore-OO-Härte von 5 bis 100 aufweist, wie gemäß

9. Eine Polyurethanschicht, die unter Verwendung des Reaktionssystems zum Bilden eines Polyurethanprodukts gemäß einem der Ansprüche 1 bis 5 hergestellt ist, wobei die Polyurethanfolie eine Shore-A-Härte von 5 bis 100 aufweist, wie gemäß ASTM D-2240 gemessen.

## Revendications

1. Un système réactionnel pour former un produit de polyuréthane, le système comprenant :
un constituant isocyanate ; et
un constituant réactif aux isocyanates incluant un polyol de polyéther contenant du soufre qui est un initiateur contenant du soufre alcoxylé, ayant une Structure (I) 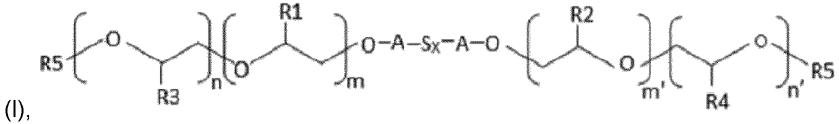 attendu que R1, R2, R3 et R4 sont indépendamment sélectionnés dans un groupe constitué de groupes méthyle (-CH₃) et éthyle (-CH₂CH₃) ; R5 est l'hydrogène ; x est un nombre sélectionné dans un groupe constitué de 1 et 2 ; m, m', n, et n' sont indépendamment sélectionnés à partir d'un nombre dans une plage de zéro à vingt de sorte que la somme de m, m', n et n' est au moins six et A est sélectionné dans un groupe constitué de groupes -C₂H₄- et C₆H₄ ;
le polyol de polyéther contenant du soufre ayant une masse moléculaire moyenne en nombre allant de 400 g/mol à 10 000 g/mol et l'initiateur contenant du soufre ayant une autre masse moléculaire moyenne en nombre qui est inférieure à la masse moléculaire moyenne en nombre du polyol de polyéther contenant du soufre,
la composition ayant une teneur en soufre allant de 0,1 % en poids à 3,0 % en poids, rapporté à un poids total de la composition.

2. Le système réactionnel tel que revendiqué dans la revendication 1, dans lequel le polyol de polyéther contenant du soufre est présent dans une quantité allant 3 % en poids à 40 % en poids, rapporté à un poids total du constituant réactif aux isocyanates.

3. Le système réactionnel tel que revendiqué dans n'importe laquelle des revendications 1 à 2, dans lequel l'initiateur contenant du soufre est le thiodiglycol, le 2,2'-dithiodiéthanol, ou une combinaison de ceux-ci.

4. Le système réactionnel tel que revendiqué dans n'importe laquelle des revendications 1 à 3, dans lequel constituant réactif aux isocyanates inclut en outre :
un premier polyol de polyéther polyoxyéthylène-polyoxypropylène qui a une teneur en oxyde d'éthylène d'au moins 50 % en poids, a une fonctionnalité hydroxyle nominale allant de 2 à 6, a une masse moléculaire allant de 500 g/mol à 5 000 g/mol, et représente 10 % en poids à 80 % en poids du constituant réactif aux isocyanates,
un deuxième polyol de polyéther polyoxypropylène-polyoxyéthylène qui a une teneur en oxyde d'éthylène inférieure à 20 % en poids, a une fonctionnalité hydroxyle nominale allant de 2 à 6, a une masse moléculaire allant de 1000 g/mol à 6 000 g/mol, et représente 5 % en poids à 70 % en poids du constituant réactif aux isocyanates, et un polyol de polyéther polyoxypropylène qui a une fonctionnalité hydroxyle nominale allant de 2 à 6, a une masse moléculaire allant de 500 g/mol à 5 000 g/mol, et représente 5 % en poids à 70 % en poids du constituant réactif aux isocyanates.

5. Le système réactionnel tel que revendiqué dans n'importe laquelle des revendications 1 à 3, dans lequel constituant réactif aux isocyanates inclut en outre :
un premier polyol de polyéther polyoxyéthylène-polyoxypropylène qui a une teneur en oxyde d'éthylène d'au moins 50 % en poids, a une fonctionnalité hydroxyle nominale allant de 2 à 4, a une masse moléculaire allant de 700 g/mol à 1 500 g/mol, et représente 25 % en poids à 60 % en poids du constituant réactif aux isocyanates,
un deuxième polyol de polyéther polyoxypropylène-polyoxyéthylène qui a une teneur en oxyde d'éthylène inférieure à 20 % en poids, a une fonctionnalité hydroxyle nominale allant de 2 à 4, a une masse moléculaire allant de 1 600 g/mol à 4 000 g/mol, et représente 10 % en poids à 40 % en poids du constituant réactif aux isocyanates, et un polyol de polyéther polyoxypropylène qui a une fonctionnalité hydroxyle nominale allant de 2 à 4, a une masse moléculaire allant de 500 g/mol à 2 000 g/mol, et représente 10 % en poids à 40 % en poids du constituant réactif aux isocyanates.

6. Une mousse de polyuréthane viscoélastique préparée à l'aide du système réactionnel pour former un produit de polyuréthane tel que revendiqué dans n'importe laquelle des revendications 1 à 5, la mousse de polyuréthane viscoélastique ayant une élasticité qui est inférieure ou égale à 20 %, telle que mesurée conformément à l'ASTM D-3574.

7. Une mousse de polyuréthane souple préparée à l'aide du système réactionnel pour former un produit de polyuréthane tel que revendiqué dans n'importe laquelle des revendications 1 à 5, la mousse de polyuréthane souple ayant une élasticité qui est supérieure à 20 %, telle que mesurée conformément à l'ASTM D-3574.

8. Une couche de polyuréthane préparée à l'aide du système réactionnel pour former un produit de polyuréthane tel que revendiqué dans n'importe laquelle des revendications 1 à 5, l'élastomère de polyuréthane ayant une dureté Shore OO allant de 5 à 100, conformément à l'ASTM D-2240.

9. Une couche de polyuréthane préparée à l'aide du système réactionnel pour former un produit de polyuréthane tel que revendiqué dans n'importe laquelle des revendications 1 à 5, le film de polyuréthane ayant une dureté Shore A allant de 5 à 100, conformément à l'ASTM D-2240.
